# EUROPÄISCHE PATENTSCHRIFT

(11) **EP 3 305 057 B1**
(45) Veröffentlichungstag und Bekanntmachung des Hinweises auf die Patenterteilung: **17.04.2019**
(21) Anmeldenummer: 17401104.9
(22) Anmeldetag: 05.10.2017
(51) Int. Cl.: A01C 19/04

(54) **SÄMASCHINE ZUM AUSBRINGEN VON SAATGUT UND/ODER DÜNGER**
SOWING MACHINE FOR SPREADING SEEDS AND/OR FERTILISER
SEMOIR PERMETTANT DE RÉPANDRE DES SEMENCES ET/OU DES ENGRAIS

(30) Priorität: 07.10.2016 DE 102016119040
(43) Veröffentlichungstag der Anmeldung: 11.04.2018
(73) Patentinhaber: Amazonen-Werke H. Dreyer GmbH & Co. KG, 49205 Hasbergen (DE)
(72) Erfinder: Schröder, Olaf, 27798 Hude (DE); Helms, Helge, 26125 Oldenburg (DE)

(56) Entgegenhaltungen:
- EP-A1- 1 618 776
- DE-A1-102007 027 089

## Beschreibung

Die Erfindung betrifft eine Sämaschine zum Ausbringen von Saatgut und/oder Dünger gemäß dem Oberbegriff des Patentanspruches 1.

Derartige Sämaschinen weisen üblicherweise ein Laufrad auf, welches auf dem Boden, auf welchem das Saatgut und/oder der Dünger ausgebracht werden soll, abrollt. Auf Grundlage der Drehgeschwindigkeit des Laufrads kann dann ein Dosierorgan der Sämaschine die auszubringende Saatgut- und/oder Düngermenge entsprechend dosieren.

Damit ein Abrollen des Laufrads bei der Straßenfahrt der Sämaschine vermieden und7oder in Außerbetriebsstellung gebracht werden kann, verfügen gattungsgemäße Sämaschinen über eine Schwenkmechanik, mittels welcher das Laufrad zwischen einem Transportzustand und einem Arbeitszustand verbringbar ist. Das Laufrad ist in dem Transportzustand angehoben und in dem Arbeitszustand bis auf den Boden abgesenkt.

Die Schwenkmechanik umfasst einen Tragbalken, welcher an einem Rahmen der Sämaschine befestigt ist. An dem Tragbalken ist ein Tragarm um eine Schwenkachse schwenkbar befestigt, wobei das Laufrad von dem Tragarm getragen wird.

Sämaschinen gemäß des Oberbegriffes des Anspruches 1 sind durch die EP 1 618 776 A1 oder DE 10 2007 027 089 A1 bekannt. Die Druckschrift DE 38 07 206 A1 schlägt diesbezüglich eine Gerätekombination vor, deren Dosierorgane von einem als Greifrad ausgebildeten Antriebsrad angetrieben werden. Dabei ist vorgesehen, dass das Antriebsrad an einem Tragarm angeordnet ist, dass der Tragarm mit einem Rahmen verbunden ist, und dass der Tragarm als Schwinge und das Antriebsrad als Stützrad ausgebildet ist. Ferner ist aus der Druckschrift DE 10 2007 027 089 A1 eine Sämaschine bekannt, bei welcher an einem Rahmen mittels eines Anlenkarms ein Antriebsrad einer Dosiereinrichtung angeordnet ist. Der Anlenkarm ist mit dem Antriebsrad in eine Arbeitsposition absenkbar und in eine Außerbetriebsposition anhebbar. Dabei ist vorgesehen, dass der Anlenkarm mittels einer Gummilagerung an einem Scharbalken angelenkt ist.

Darüber hinaus ist aus der Druckschrift DE 10 2004 035 265 A1 eine Sämaschine mit einem Rahmen, einem Vorratsbehälter und einem Dosierorgan bekannt, wobei das Dosierorgan von einem auf dem Boden abrollenden Antriebsrad über einen Antriebsstrang angetrieben wird. Das Antriebsrad ist mittels eines Schwenkgelenkes angelenkt, wobei das Schwenkgelenk eine quer zur Fahrtrichtung ermöglichende Schiebebewegung zulassende Schiebeführung aufweist.

Bei diesen und anderen bekannten Lösungen wird eine Feder eingesetzt, um den Tragarm samt dem daran befestigten Laufrad in der abgesenkten Stellung des Arbeitszustands auf den Boden drücken. Hierdurch bleibt das Rad stets in Kontakt mit dem Boden, sodass das Rad eine zuverlässige Bestimmung der momentanen Fahrgeschwindigkeit der Sämaschine erlaubt. Außerdem wird die Federkraftbeaufschlagung zur Umsetzung eines Überlastschutzes genutzt. Das Laufrad kann durch die schwenkbare Anlenkung des Tragarms ausgelenkt werden, wobei die Federkraft der Auslenkung entgegenwirkt und das Laufrad wieder in Richtung des Bodens bewegt.

Beim Verbringen des Laufrads von der abgesenkten Stellung in die angehobene Stellung des Transportzustands bleibt der Tragarm jedoch federkraftbelastet. Dies führt zu einer erheblichen Steigerung des Verletzungsrisikos für den Maschinenbediener, da der Tragarm unter Spannung festgestellt wird. Bei einem unachtsamen Lösen der Feststellung kann der Maschinenbediener durch den zurückschnellenden Tragarm getroffen werden. Außerdem führt die stetige hohe Federbeanspruchung zu einer reduzierten Lebensdauer der verwendeten Feder. Ferner wird eine schleichende Veränderung der Federeigenschaften durch die Dauerbeanspruchung gefördert.

Die der Erfindung zugrundeliegende Aufgabe besteht somit darin, eine Sämaschine bereitzustellen, deren Laufradaufhängung ein verringertes Verletzungsrisiko für den Maschinenbediener bedingt und eine gesteigerte Lebensdauer aufweist.

Die Aufgabe wird gelöst mit den kennzeichnenden Merkmalen des Anspruches 1. Die Erfindung macht sich die Erkenntnis zunutze, dass der Tragarm mittels eines federkraftbeaufschlagten separaten Koppelglieds von der eingesetzten Feder entkoppelt werden kann, ohne dass die Feder demontiert beziehungsweise außer Eingriff zu bringen ist. Dadurch, dass das federkraftbeaufschlagte separate Koppelglied dazu eingerichtet ist, eine Federkraft an den Tragarm zu übertragen, fungiert das Koppelglied als kraftübertragendes Bindeglied zwischen der Feder und dem Tragarm. Ferner ist das federkraftbeaufschlagte separate Koppelglied durch die zerstörungsfrei und reversibel lösbare Verbindbarkeit mit dem Tragarm dazu eingerichtet, die Übertragung der Federkraft auf den Tragarm durch Lösen der Verbindung zu dem Tragarm zu unterbrechen. Dadurch kann das Laufrad in der angehobenen Transportstellung ohne Federkraftbelastung des Tragarms festgestellt werden, wodurch das Verletzungsrisiko für den Maschinenbediener verringert und die Lebensdauer der Laufradaufhängung gesteigert wird.

Das federkraftbeaufschlagte separate Koppelglied ist um die Schwenkachse des Tragarms schwenkbar an dem Tragarm und/oder dem Tragbalken angelenkt. Hierbei erstrecken sich vorzugsweise ein oder mehrere Befestigungselemente entlang der Schwenkachse des Tragarms durch ein oder mehrere Durchgangslöcher des Tragbalkens, ein oder mehrere Durchgangslöcher des Tragarms und ein oder mehrere Durchgangslöcher des federkraftbeaufschlagten separaten Koppelglieds.

In einer bevorzugten Ausführungsform der erfindungsgemäßen Sämaschine überträgt das federkraftbeaufschlagte separate Koppelglied in dem Arbeitszustand des Laufrads die Federkraft derart an den Tragarm, dass das Laufrad in Richtung des Bodens gedrückt oder gezogen wird. Das federkraftbeaufschlagte separate Koppelglied kann in dem Arbeitszustand des Laufrads somit beispielsweise eine Zugkraft oder eine Druckkraft übertragen. Dadurch, dass das Laufrad durch das federkraftbeaufschlagte separate Koppelglied in Richtung des Bodens gedrückt oder gezogen wird, ist das Laufrad stets in Kontakt mit dem Boden und kann auch Bodenunebenheiten ohne Beschädigungsgefahr.

In einer anderen bevorzugten Ausführungsform der erfindungsgemäßen Sämaschine überträgt das federkraftbeaufschlagte separate Koppelglied in dem Transportzustand des Laufrads die Federkraft nicht an den Tragarm. Der Tragarm ist somit federkraftentlastet und von dem federkraftbeaufschlagten separaten Koppelglied entkoppelt. Es besteht somit nicht die Gefahr, dass der Tragarm beim Verbringen des Laufrads von dem Transportzustand in den Arbeitszustand durch ein unachtsames Lösen der Tragarmfeststellung durch die Federkraft ausgelenkt wird und den Maschinenbediener verletzt. Ferner wird die Feder nach dem Verbringen des Laufrads in den Transportzustand nicht dauerhaft übermäßig beansprucht, sodass die Lebensdauer erhöht und die Ausfallwahrscheinlichkeit der Feder reduziert wird.

In einer vorteilhaften Weiterbildung der erfindungsgemäßen Sämaschine ist das federkraftbeaufschlagte separate Koppelglied mittels eines Sicherungsstifts zerstörungsfrei und reversibel lösbar mit dem Tragarm verbindbar. Durch die Verwendung eines Sicherungsstifts ist die Verbindung zwischen dem federkraftbeaufschlagten separaten Koppelglied und dem Tragarm ohne großen Aufwand durch den Maschinenbediener manuell lösbar. Insbesondere weist der Sicherungsstift einen Befestigungsabschnitt zum Befestigen des federkraftbeaufschlagten separaten Koppelglieds an dem Tragarm und einen Griffabschnitt zum Greifen durch den Maschinenbediener auf. Insbesondere ist der Griffabschnitt des Sicherungsstifts rechtwinklig zu dem Befestigungsabschnitt des Sicherungsstifts angeordnet. Ferner kann der Sicherungsstift durch einen Splint gegen axiales Verschieben gesichert sein.

Bevorzugt ist außerdem eine erfindungsgemäße Sämaschine, deren Tragarm einen Sicherungsbereich aufweist, wobei der Sicherungsbereich des Tragarms und das federkraftbeaufschlagte separate Koppelglied in Deckung bringbare Durchgangslöcher für den Sicherungsstift aufweisen. Vorzugsweise umfasst der Sicherungsbereich des Tragarms zwei parallel zueinander und beabstandet voneinander angeordnete Sicherungsplatten, welche als Bleche ausgebildet sein können und auf gegenüberliegenden Seiten einer Strebe des Tragarms angeordnet und über mehrere, insbesondere vier Schrauben mit der Strebe des Tragarms verklemmt sind.

In einer anderen Ausführungsform der erfindungsgemäßen Sämaschine sind mehrere unterschiedliche Relativpositionen zwischen dem federkraftbeaufschlagten separaten Koppelglied und dem Tragarm zur Verstellung der Absenktiefe des Laufrads in dem Arbeitszustand des Laufrads einstellbar. Durch die Möglichkeit mehrere unterschiedliche Relativpositionen zwischen dem federkraftbeaufschlagten separaten Koppelglied und dem Tragarm einstellen zu können, kann eine Anpassung an die Aushubhöhe der Maschine erfolgen. Vorzugsweise stimmt die von dem federkraftbeaufschlagten separaten Koppelglied an den Tragarm übertragene Federkraft in sämtlichen Relativpositionen zwischen dem federkraftbeaufschlagten separaten Koppelglied und dem Tragarm überein. Dies wird dadurch erreicht, dass beim Einstellen der unterschiedlichen Relativpositionen zwischen dem federkraftbeaufschlagten separaten Koppelglied und dem Tragarm eine Auslenkung der Feder nicht notwendig ist.

Bevorzugt ist außerdem eine erfindungsgemäße Sämaschine, bei welcher der Sicherungsbereich des Tragarms und/oder das federkraftbeaufschlagte separate Koppelglied zur Einstellung der mehreren unterschiedlichen Relativpositionen mehrere beabstandet voneinander und vorzugsweise auf einer Kreisbahn angeordnete Durchgangslöcher für den Sicherungsstift aufweisen. Vorzugsweise verläuft die Kreisbahn um die Schwenkachse des Tragarms. Somit können die mehreren beabstandet zueinander und auf einer Kreisbahn angeordneten Durchganglöcher des Tragarms in verschiedenen Schwenkpositionen des Tragarms mit einem oder mehreren Durchgangslöchern des federkraftbeaufschlagten separaten Koppelglieds in Deckung gebracht werden. Alternativ oder zusätzlich können die mehreren beabstandet zueinander und auf einer Kreisbahn angeordneten Durchganglöcher des federkraftbeaufschlagten separaten Koppelglieds in verschiedenen Schwenkpositionen des Tragarms mit einem oder mehreren Durchgangslöchern des Tragarms in Deckung gebracht werden.

In einer weiteren Ausführungsform der erfindungsgemäßen Sämaschine wirkt zwischen dem Tragbalken und dem federkraftbeaufschlagten separaten Koppelglied eine Feder, insbesondere eine Zugfeder oder eine Gasdruckfeder. Die Feder sorgt für die Federkraftbeaufschlagung des separaten Koppelglieds. Die Feder ist vorzugsweise als Schraubenfeder ausgebildet und weist an den gegenüberliegenden Enden Hakenabschnitte auf, mittels welchen sich die Feder formschlüssig einhaken lässt. Die äußere Form der als Schraubenfeder ausgebildeten Feder ist vorzugsweise zylinder-, kegel- oder tonnenförmig. Dies erlaubt die Umsetzung unterschiedlicher und auf die Einsatzbedingungen abgestimmter Federeigenschaften. Ferner kann die Feder eine Einstelleinrichtung aufweisen, mittels welcher die auf das separate Koppelglied aufgebrachte Federkraft einstellbar ist. Die Einstelleinrichtung kann beispielsweise eine Augenschraube umfassen.

In einer besonders bevorzugten Ausführungsform der erfindungsgemäßen Sämaschine folgt das federkraftbeaufschlagte separate Koppelglied in dem Arbeitszustand des Laufrads den durch Bodenunebenheiten ausgelösten Schwenkbewegungen des Tragarms. Dies wird dadurch erreicht, dass das federkraftbeaufschlagte separate Koppelglied und der Tragarm einerseits um dieselbe Schwenkachse schwenkbar angelenkt sind und das federkraftbeaufschlagte separate Koppelglied andererseits in dem Arbeitszustand des Laufrads zerstörungsfrei und reversibel lösbar mit dem Tragarm verbunden ist, insbesondere mittels eines Sicherungsstifts. Dadurch, dass das federkraftbeaufschlagte separate Koppelglied in dem Arbeitszustand des Laufrads den durch Bodenunebenheiten ausgelösten Schwenkbewegungen des Tragarms folgt, kommt es bei einer durch Bodenunebenheiten ausgelösten Schwenkbewegungen des Tragarms zu einer Auslenkung der an dem separaten Koppelglied angreifenden Feder. Die Feder erzeugt oder verstärkt durch die Auslenkung eine Rückstellung, welche das Laufrad in Richtung des Bodens drückt. In einer anderen Ausführungsform der erfindungsgemäßen Sämaschine weist das federkraftbeaufschlagte separate Koppelglied eine Anschlagsfläche auf, wobei die Anschlagsfläche mit dem Tragbalken in Kontakt bringbar ist. Vorzugsweise wird die Anschlagsfläche des federkraftbeaufschlagten separaten Koppelglieds durch die Feder und durch das Eigengewicht des Tragarms in dem Arbeitszustand des Laufrads in Richtung des Tragbalkens gedrückt. Wenn die Bodenbeschaffenheit durch eine Vertiefung eine ausreichende Schwenkbewegung des Tragarms erlaubt, schlägt die Anschlagsfläche des federkraftbeaufschlagten separaten Koppelglieds an dem Tragbalken an.

Vorzugsweise verhindert die Anschlagsfläche des federkraftbeaufschlagten separaten Koppelglieds durch den Kontakt mit dem Tragbalken ein weiteres Verschwenken des federkraftbeaufschlagten separaten Koppelglieds um die Schwenkachse und somit ein weiteres Absenken des Laufrads. In dem Arbeitszustand des Laufrads ist zwischen der Anschlagsfläche des federkraftbeaufschlagten separaten Koppelglieds und dem Tragbalken vorzugsweise ein ausreichend großer Freiraum ausgebildet. Durch diesen Freiraum können im Arbeitszustand des Laufrads auch Bodenvertiefungen durch eine entsprechende Schwenkbewegung des Tragarms und des federkraftbeaufschlagten separaten Koppelglieds in Richtung des Tragbalkens ausgeführt werden, bevor ein Anschlag an dem Tragbalken ein weiteres Verschwenken des federkraftbeaufschlagten separaten Koppelglieds um die Schwenkachse und somit ein weiteres Absenken des Laufrads verhindert. Durch das Anliegen der Anschlagsfläche des federkraftbeaufschlagten separaten Koppelglieds an dem Tragbalken kann somit ein zu starkes Absenken des Laufrads vermieden werden.

In einer vorteilhaften Weiterbildung der erfindungsgemäßen Sämaschine weist das federkraftbeaufschlagte separate Koppelglied zwei voneinander beabstandete Sicherungsplatten und ein Verbindungsglied auf, wobei das Verbindungsglied die zwei Sicherungsplatten miteinander verbindet. Die Sicherungsplatten sind vorzugsweise identisch ausgebildet. Insbesondere weisen der Tragarm und/oder der Tragbalken jeweils einen U-förmigen Anlenkabschnitt auf, wobei die gegenüberliegenden Segmente der U-förmigen Anlenkabschnitte und die Sicherungsplatten jeweils eine Durchgangsbohrung aufweisen. Die Durchgangsbohrungen sind koaxial angeordnet, wobei die Schwenkachse des Tragarms und des federkraftbeaufschlagten separaten Koppelglieds sich durch die Durchgangsbohrungen erstreckt.

Bevorzugt ist es ferner, dass die Feder formschlüssig mit dem Verbindungsglied des federkraftbeaufschlagten separaten Koppelglieds und/oder formschlüssig mit dem Tragbalken verbunden ist. Vorzugsweise greifen die gegenüberliegenden Hakenabschnitte der Feder in das Verbindungsglied des federkraftbeaufschlagten separaten Koppelglieds und den Tragbalken ein.

In einer besonders bevorzugten Ausführungsform der erfindungsgemäßen Sämaschine ist der Tragarm, vorzugsweise mittels eines Sicherungsstifts, zerstörungsfrei und reversibel lösbar und im Wesentlichen starr mit dem Tragbalken verbindbar. Vorzugsweise ist die Verbindung mit demselben Sicherungsstift herstellbar, welcher auch zur Verbindung des Tragarms mit dem federkraftbeaufschlagten separaten Koppelglied verwendbar ist. Somit kann der Sicherungsstift vor dem Verschwenken des Tragarms zum Verbringen des Laufrads von dem Arbeitszustand in den Transportzustand gelöst werden und nach Abschluss des Schwenkvorgangs zur Sicherung des Tragarms wieder eingesetzt werden. Das Risiko eines Verlusts des Sicherungsstifts wird somit erheblich verringert.

In einer anderen Ausführungsform der erfindungsgemäßen Sämaschine ist der Tragarm in dem Transportzustand des Laufrads zerstörungsfrei und reversibel lösbar und im Wesentlichen starr mit dem Tragbalken verbunden. Der Tragarm erstreckt sich in dem Transportzustand des Laufrads vorzugsweise in vertikaler Richtung von dem Tragbalken nach oben und/oder ist im Wesentlichen rechtwinklig zu dem Tragbalken angeordnet.

Außerdem ist eine erfindungsgemäße Sämaschine bevorzugt, deren Tragbalken einen Sicherungsbereich aufweist, wobei der Sicherungsbereich des Tragbalkens und der Sicherungsbereich des Tragarms in Deckung bringbare Durchgangslöcher für einen Sicherungsstift aufweisen. Vorzugsweise umfasst der Sicherungsbereich des Tragbalkens zwei parallel zueinander und beabstandet voneinander angeordnete Sicherungsplatten, welche auf gegenüberliegenden Seiten einer Strebe des Tragbalkens angeordnet und über mehrere, insbesondere vier Schrauben mit der Strebe des Tragbalkens verklemmt sind.

Die Drehgeschwindigkeit des Laufrads kann beispielsweise mechanisch und/oder elektronisch an das Dosierorgan übertragen werden. Bei der mechanischen Übertragung kann eine Gelenkwelle oder ein Kettenbrieb Verwendung finden. Bei der elektronischen Übertragung kann ein Sensor verwendet werden, welcher die Drehgeschwindigkeit erfasst, wobei das Sensorsignal dann kabellos oder kabelgebunden an das Dosierorgan oder ein vorgeschaltetes Steuergerät übertragen wird. Das Laufrad kann als Spornrad ausgebildet sein.

Insbesondere ist auch eine Sämaschine bevorzugt, bei welcher das Laufrad in dem Arbeitszustand hinter den Säscharen und/oder Striegeln der Sämaschine angeordnet ist. Außerdem kann der Tragbalken in einer bevorzugten Ausführung starr an dem Rahmen der Sämaschine befestigt sein.

Weitere Einzelheiten der Erfindung sind der Figurenbeschreibung und den Zeichnungen zu entnehmen. Es zeigen
- Fig. 1: ein Ausführungsbeispiel der erfindungsgemäßen Sämaschine in einer schematischen Darstellung;
- Fig. 2: eine Laufradaufhängung der erfindungsgemäßen Sämaschine, wobei sich das Laufrad in dem Arbeitszustand befindet;
- Fig. 3: Teile der Laufradaufhängung aus Fig. 2 in einer weiteren Darstellung;
- Fig. 4: eine Laufradaufhängung der erfindungsgemäßen Sämaschine, wobei sich das Laufrad in dem Transportzustand befindet; und
- Fig. 5: Teile der Laufradaufhängung aus Fig. 4 in einer weiteren Darstellung.

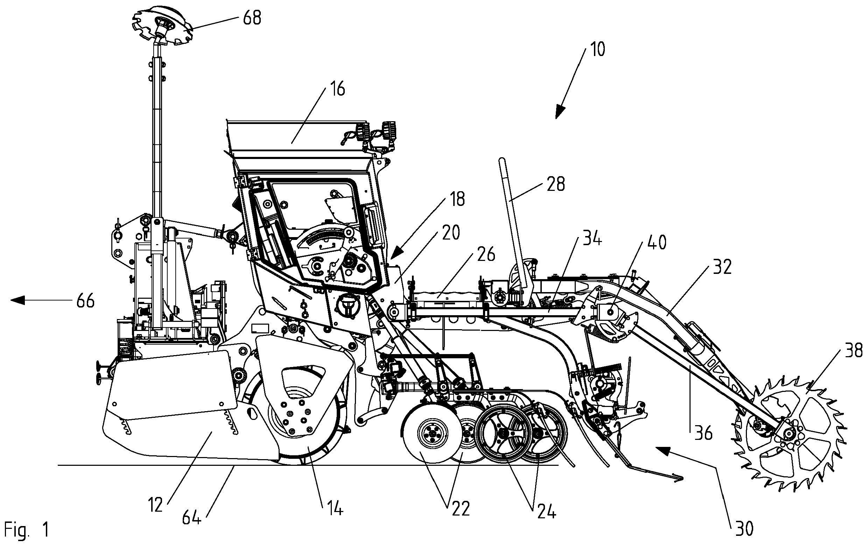

Die Fig. 1 zeigt eine Sämaschine 10 zum Ausbringen von Saatgut und/oder Dünger, welche als Aufbausämaschine ausgebildet ist. Die dargestellte Säkombination umfasst neben der Sämaschine 10 eine Bodenbearbeitungsmaschine 12 und eine Walze 14. Die Bodenbearbeitungsmaschine12 kann beispielsweise als Kreiselgrubber oder Kreiselegge ausgebildet sein. Die Walze 14 kann beispielsweise als Keilringwalze, Zahnpackerwalze oder Cracker-Discwalze ausgebildet sein. Oberhalb der Bodenbearbeitungsmaschine12 ist ein schwenkbarer Spuranreißer 68 angeordnet, dessen Spur als Orientierungshilfe für die Traktormitte bei der Anschlussfahrt dient. Die Sämaschine 10 ist dazu eingerichtet, sich in die Fahrtrichtung 66 zu bewegen.

Die Sämaschine 10 umfasst einen Vorratsbehälter 16 zur Bevorratung von Saatgut und/oder Dünger. Das Saatgut und/oder der Dünger aus dem Vorratsbehälter 16 wird einem Dosierorgan 18 zugeleitet, welches dazu eingerichtet ist, die Saatgut- und/oder Düngermenge zu dosieren. Von dem Dosierorgan 18 werden das Saatgut und/oder der Dünger einer Vielzahl von Säscharen 22 zugeleitet, welche das Saatgut und/oder den Dünger auf dem Boden 64 ablegen. Hinter den Säscharen 22 sind Rollen 24 angeordnet, die die Schare 22 in der Eindringtiefe in den Boden führen und gleichzeitig den Boden oberhalb der im Boden abgelegten Saatgutes angedrückt.

Oberhalb der Säschare 22 ist eine Plattform 26 angeordnet, welche von einem Maschinenbediener als Standfläche verwendet werden kann. Entlang der Plattform 26 erstreckt sich ein Haltebügel 28, welcher von dem Maschinenbediener von der Plattform 26 aus greifbar ist. Hinter den Säscharen 22 und den Rollen 24 ist eine Striegeleinheit 30 angeordnet, welche eine Vielzahl von als Zinken ausgebildeten Striegelelementen umfasst. Die Striegelelemente dienen zur Einbettung des Saatguts und/oder des Düngers in das Erdreich. Hinter der Striegeleinheit 30 ist ein Bügel 32 mit einer Markiereinrichtung (verdeckt) angeordnet. Die Markiereinrichtung ist dazu eingerichtet, eine angelegte Fahrgasse zu markieren, bevor das Saatgut aufgelaufen ist.

An einem Rahmen 20 ist ein im Wesentlichen horizontal und in Fahrtrichtung 66 ausgerichteter Tragbalken 34 befestigt. Alternativ kann der Tragbalken 34 auch an einem nicht dargestellten Ladesteg befestigt sein. An dem Tragbalken 34 ist ein Tragarm 36 über ein Gelenk 40 schwenkbar angelenkt. An dem Tragarm 36 ist ein Laufrad 38 befestigt, welches zwischen einem Transportzustand und einem Arbeitszustand verbringbar ist, wobei das Laufrad 38 in dem Transportzustand angehoben und in dem Arbeitszustand, wie dargestellt, bis auf den Boden 64 abgesenkt ist. Das Laufrad 38 ist als Spornrad ausgebildet.

Die Drehgeschwindigkeit des Laufrads 38 wird über eine Gelenkwelle (verdeckt) mechanisch an das Dosierorgan 18 übertragen. Das Dosierorgan 18 ist dazu eingerichtet, die auszubringende Saatgut- und/oder Düngermenge in Abhängigkeit der Drehgeschwindigkeit des Laufrads 38 zu dosieren.

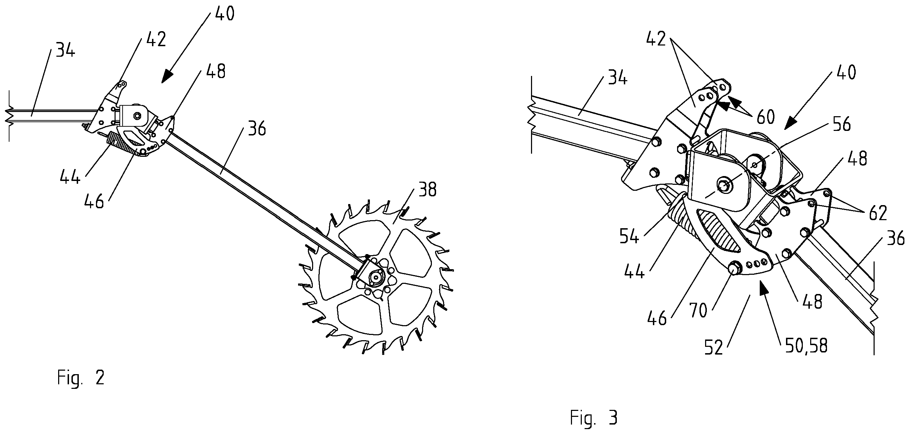

Die Fig. 2 und die Fig. 3 zeigen eine Laufradaufhängung, wobei sich das Laufrad 38 in dem Arbeitszustand befindet. Ein Tragarm 36 ist um eine Schwenkachse 56 schwenkbar mit dem Tragbalken 34 verbunden. Zwischen dem Tragbalken 34 und dem Tragarm 36 ist hierzu ein Gelenk 40 angeordnet. Der Tragbalken 34 weist einen Sicherungsbereich 42 auf, welcher zwei identische, parallel zueinander und beabstandet voneinander angeordnete Sicherungsplatten umfasst. Die Sicherungsplatten sind über insgesamt vier Schraubverbindungen mit einer Strebe des Tragbalkens 34 verklemmt. An dem Tragbalken 34 ist ein erstes Ende einer als Zugschraubenfeder ausgebildeten Feder 44 befestigt. Das zweite Ende der Feder 44 ist an einem separaten Koppelglied 46 befestigt, welches wiederum über einen Sicherungsstift 52 mit einem Sicherungsbereich 48 des Tragarms 36 zerstörungsfrei und reversibel lösbar verbunden ist. Der Sicherungsbereich 48 des Tragarms 36 weist ebenfalls zwei identische, parallel zueinander und beabstandet voneinander angeordnete Sicherungsplatten auf. Die Sicherungsplatten sind auch über insgesamt vier Schraubverbindungen mit einer Strebe des Tragarms 36 verklemmt.

Das federkraftbeaufschlagte separate Koppelglied 46 überträgt die Federkraft an den Tragarm 36. Die Federkraft wird derart an den Tragarm 36 übertragen, dass das Laufrad 38 in Richtung des Bodens 64 gedrückt wird. Das federkraftbeaufschlagte separate Koppelglied 46 ist ebenfalls um die Schwenkachse 56 des Tragarms 36 schwenkbar an dem Tragarm 36 und dem Tragbalken 34 angelenkt. Das federkraftbeaufschlagte separate Koppelglied 46 folgt durch die Schwenkbarkeit um die Schwenkachse 56 und die zerstörungsfrei und reversibel lösbare Verbindung mit dem Sicherungsbereich 48 des Tragarms 36 den durch Bodenunebenheiten ausgelösten Schwenkbewegungen des Tragarms 36.

Das federkraftbeaufschlagte separate Koppelglied 46 weist eine Anschlagsfläche 54 auf, welche mit dem Tragbalken 34 in Kontakt bringbar ist. Wenn die Anschlagsfläche 54 des federkraftbeaufschlagten separaten Koppelglieds 46 an dem Tragbalken 34 anliegt, wird dadurch ein weiteres Verschwenken des federkraftbeaufschlagten separaten Koppelglieds 46 um die Schwenkachse 56 und somit ein weiteres Absenken des Laufrads 38 verhindert.

Das federkraftbeaufschlagte separate Koppelglied 46 weist zwei identische, parallel zueinander ausgerichtete und voneinander beabstandete Sicherungsplatten und ein Verbindungsglied 70 auf, wobei das Verbindungsglied 70 die zwei Sicherungsplatten miteinander verbindet. Die Feder 44 ist formschlüssig mit dem Verbindungsglied 70 des federkraftbeaufschlagten separaten Koppelglieds 46 und formschlüssig mit dem Tragbalken 34 verbunden.

Die zwei Sicherungsplatten des federkraftbeaufschlagten separaten Koppelglieds 46 weisen jeweils drei beabstandet voneinander und auf einer Kreisbahn angeordnete Durchgangslöcher 50 auf. Die zwei Sicherungsplatten des Sicherungsbereichs 48 des Tragarms 36 weisen jeweils ein Durchgangsloch 58 auf. Die Durchgangslöcher 50 des federkraftbeaufschlagten separaten Koppelglieds 46 und die Durchgangslöcher 58 des Sicherungsbereichs 48 des Tragarms 36 sind in drei unterschiedlichen Relativpositionen zwischen dem federkraftbeaufschlagten separaten Koppelglied 46 und dem Tragarm 36 in Deckung bringbar. Vorliegend sind jeweils die mittig angeordneten Durchgangslöcher der der Durchgangslöcher 50 der zwei Sicherungsplatten des federkraftbeaufschlagten separaten Koppelglieds 46 mit den Durchgangslöchern 58 der zwei Sicherungsplatten des Sicherungsbereichs 48 des Tragarms 36 in Deckung gebracht. Der Sicherungsstift 52 erstreckt sich durch die in Deckung gebrachten Durchganglöcher 50, 58.

Durch die drei unterschiedlichen Relativpositionen zwischen dem federkraftbeaufschlagten separaten Koppelglied 46 und dem Tragarm 36 lässt sich die Absenktiefe des Laufrads 38 oder umgekehrt auch der Abschaltpunkt beim Ausheben der Maschine einstellen.

Die zwei Sicherungsplatten des Sicherungsbereichs 42 des Tragbalkens 34 weisen jeweils zwei Durchgangslöcher 60 auf, welche mit den Durchgangslöchern 62 der zwei Sicherungsplatten des Sicherungsbereichs 48 des Tragarms 36 in Deckung bringbar sind, um den Tragarm 36 in einer im Wesentlichen aufrechten Stellung in dem Transportzustand des Laufrads 38 mittels des Sicherungsstifts 52 feststellen zu können.

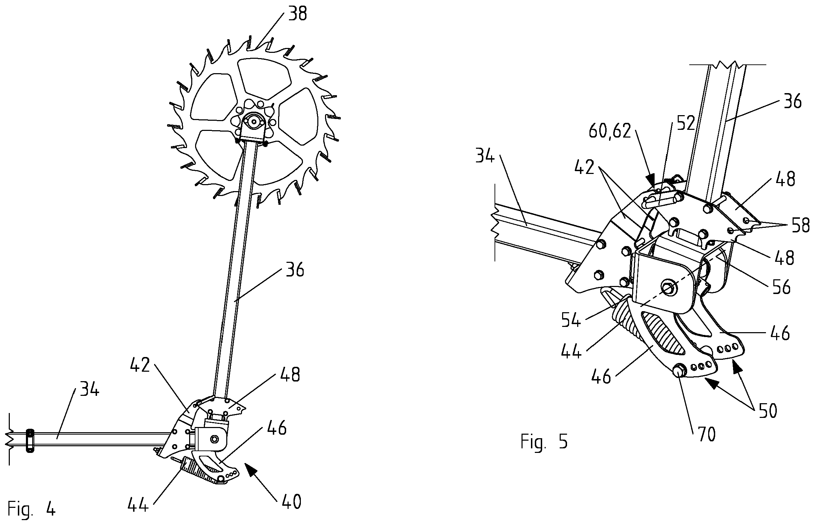

Die Fig. 4 und die Fig. 5 zeigen eine Laufradaufhängung, wobei sich das Laufrad 38 in dem Transportzustand befindet. Zum Verbringen des Laufrads 38 von dem Arbeitszustand in den Transportzustand ist die zerstörungsfrei und reversibel lösbare Verbindung zwischen dem federkraftbeaufschlagten separaten Koppelglied 46 mit dem Tragarm 36 durch eine Entnahme des Sicherungsstifts 52 zu lösen.

Nachdem der Sicherungsstift 52 entfernt wurde, kann der Tragarm 36 samt dem Laufrad 38 nach oben geschwenkt werden, ohne dass die Feder 44 zusätzlich beansprucht wird. Das federkraftbeaufschlagte separate Koppelglied 46 überträgt somit in dem Transportzustand des Laufrads 38 die Federkraft nicht an den Tragarm 36.

In dem dargestellten Transportzustand des Laufrads 38 befindet sich jeweils ein Durchgangsloch der Durchgangslöcher 60 des Sicherungsbereichs 42 des Tragbalkens 34 in Deckung mit den Durchgangslöchern 62 des Sicherungsbereichs 48 des Tragarms 36. Der Sicherungsstift 52 erstreckt sich durch die in Deckung gebrachten Durchgangslöcher 60, 62. Der Tragarm 36 ist somit mittels des Sicherungsstifts 52 zerstörungsfrei und reversibel lösbar und im Wesentlichen starr mit dem Tragbalken 34 verbunden.

Die Durchgangslöcher 60 des Sicherungsbereichs 42 des Tragbalkens 34 und die Durchgangslöcher 62 des Sicherungsbereichs 48 des Tragarms 36 sind in einer Ausführungsform in zwei unterschiedlichen Relativpositionen zwischen dem Tragbalken 34 und dem Tragarm 36 in Deckung bringbar. Durch die zwei unterschiedlichen Relativpositionen zwischen dem Tragbalken 34 und dem Tragarm 36 lässt sich die Neigung des Tragarms 36 in dem Transportzustand des Laufrads 38 erforderlichenfalls einstellen.

### Bezugszeichenliste

- 10: Sämaschine
- 12: Bodenbearbeitungsmaschine
- 14: Walze
- 16: Vorratsbehälter
- 18: Dosierorgan
- 20: Rahmen
- 22: Säschare
- 24: Rollen
- 26: Plattform
- 28: Haltebügel
- 30: Striegeleinheit
- 32: Bügel mit Markiereinrichtung
- 34: Tragbalken
- 36: Tragarm
- 38: Laufrad
- 40: Gelenk
- 42: Sicherungsbereich
- 44: Feder
- 46: Koppelglied
- 48: Sicherungsbereich
- 50: Durchgangslöcher
- 52: Sicherungsstift
- 54: Anschlagsfläche
- 56: Schwenkachse
- 58: Durchgangslöcher
- 60: Durchgangslöcher
- 62: Durchgangslöcher
- 64: Boden
- 66: Fahrtrichtung
- 68: Spuranreißer
- 70: Verbindungsglied

## Patentansprüche

1. Sämaschine (10) zum Ausbringen von Saatgut und/oder Dünger, mit
- einem Laufrad (38), welches an einem Tragarm (36) befestigt und zwischen einem Transportzustand und einem Arbeitszustand verbringbar ist, wobei das Laufrad (38) in dem Transportzustand angehoben und in dem Arbeitszustand bis auf den Boden (64) abgesenkt ist;
- einem Tragbalken (34), welcher an einem Rahmen (20) befestigt ist, wobei der Tragarm (36) um eine Schwenkachse (56) schwenkbar mit dem Tragbalken (34) verbunden ist; und
- einem Dosierorgan (18), welches dazu eingerichtet ist, die auszubringende Saatgut- und/oder Düngermenge in Abhängigkeit der Drehgeschwindigkeit des Laufrads (38) zu dosieren;
wobei durch ein federkraftbeaufschlagtes separates Koppelglied (46), welches dazu eingerichtet ist, eine Federkraft an den Tragarm (36) zu übertragen, wobei das federkraftbeaufschlagte separate Koppelglied (46) zerstörungsfrei und reversibel lösbar mit dem Tragarm (36) verbindbar ist, **dadurch gekennzeichnet, dass** das federkraftbeaufschlagte separate Koppelglied (46) um die Schwenkachse (56) des Tragarms (36) schwenkbar an dem Tragarm (36) und/oder dem Tragbalken (34) angelenkt ist.

2. Sämaschine (10) nach Anspruch 1,
**dadurch gekennzeichnet, dass** das federkraftbeaufschlagte separate Koppelglied (46) in dem Arbeitszustand des Laufrads (38) die Federkraft derart an den Tragarm (36) überträgt, dass das Laufrad (38) in Richtung des Bodens (64) gedrückt oder gezogen wird.

3. Sämaschine (10) nach Anspruch 1 oder 2,
**dadurch gekennzeichnet, dass** das federkraftbeaufschlagte separate Koppelglied (46) in dem Transportzustand des Laufrads (38) die Federkraft nicht an den Tragarm (36) überträgt.

4. Sämaschine (10) nach einem der vorstehenden Ansprüche,
**dadurch gekennzeichnet, dass** das federkraftbeaufschlagte separate Koppelglied (46) mittels eines Sicherungsstifts (52) zerstörungsfrei und reversibel lösbar mit dem Tragarm (36) verbindbar ist.

5. Sämaschine (10) nach Anspruch 4,
**dadurch gekennzeichnet, dass** der Tragarm (36) einen Sicherungsbereich (48) aufweist, wobei der Sicherungsbereich (48) des Tragarms (36) und das federkraftbeaufschlagte separate Koppelglied (46) in Deckung bringbare Durchgangslöcher (50,58) für den Sicherungsstift (52) aufweisen.

6. Sämaschine (10) nach einem der vorstehenden Ansprüche,
**dadurch gekennzeichnet, dass** mehrere unterschiedliche Relativpositionen zwischen dem federkraftbeaufschlagten separaten Koppelglied (46) und dem Tragarm (36) zur Verstellung der Absenktiefe des Laufrads (38) in dem Arbeitszustand des Laufrads (38) einstellbar sind.

7. Sämaschine (10) nach den Ansprüchen 5 und 6, **dadurch gekennzeichnet, dass** der Sicherungsbereich (48) des Tragarms (36) und/oder das federkraftbeaufschlagte separate Koppelglied (46) zur Einstellung der mehreren unterschiedlichen Relativpositionen mehrere beabstandet voneinander und vorzugsweise auf einer Kreisbahn angeordnete Durchgangslöcher (50,58) für den Sicherungsstift (52) aufweisen.

8. Sämaschine (10) nach einem der vorstehenden Ansprüche,
**dadurch gekennzeichnet, dass** zwischen dem Tragbalken (34) und dem federkraftbeaufschlagten separaten Koppelglied (46) eine Feder (44), insbesondere eine Zugfeder oder eine Gasdruckfeder, wirkt.

9. Sämaschine (10) nach Anspruch 1,
**dadurch gekennzeichnet, dass** das federkraftbeaufschlagte separate Koppelglied (46) in dem Arbeitszustand des Laufrads (38) den durch Bodenunebenheiten ausgelösten Schwenkbewegungen des Tragarms (36) folgt.

10. Sämaschine (10) nach einem der vorstehenden Ansprüche,
**dadurch gekennzeichnet, dass** das federkraftbeaufschlagte separate Koppelglied (46) eine Anschlagsfläche (54) aufweist, wobei die Anschlagsfläche (54) mit dem Tragbalken (34) in Kontakt bringbar ist.

11. Sämaschine (10) nach Anspruch 10,
**dadurch gekennzeichnet, dass** die Anschlagsfläche (54) des federkraftbeaufschlagten separaten Koppelglieds (46) durch den Kontakt mit dem Tragbalken (34) ein weiteres Verschwenken des federkraftbeaufschlagten separaten Koppelglieds (46) um die Schwenkachse (56) und somit ein weiteres Absenken des Laufrads (38) verhindert.

12. Sämaschine (10) nach einem der vorstehenden Ansprüche,
**dadurch gekennzeichnet, dass** das federkraftbeaufschlagte separate Koppelglied (46) zwei voneinander beabstandete Sicherungsplatten und ein Verbindungsglied (70) aufweist, wobei das Verbindungsglied (70) die zwei Sicherungsplatten miteinander verbindet.

13. Sämaschine (10) nach Anspruch 12,
**dadurch gekennzeichnet, dass** die Feder (44) formschlüssig mit dem Verbindungsglied (70) des federkraftbeaufschlagten separaten Koppelglieds (46) und/oder formschlüssig mit dem Tragbalken (34) verbunden ist.

14. Sämaschine (10) nach einem der vorstehenden Ansprüche,
**dadurch gekennzeichnet, dass** der Tragarm (36), vorzugsweise mittels eines Sicherungsstifts (52), zerstörungsfrei und reversibel lösbar und im Wesentlichen starr mit dem Tragbalken (34) verbindbar ist.

15. Sämaschine (10) nach einem der vorstehenden Ansprüche,
**dadurch gekennzeichnet, dass** der Tragarm (36) in dem Transportzustand des Laufrads (38) zerstörungsfrei und reversibel lösbar und im Wesentlichen starr mit dem Tragbalken (34) verbunden ist.

16. Sämaschine (10) nach einem der vorstehenden Ansprüche und Anspruch 5, **dadurch gekennzeichnet, dass** der Tragbalken (34) einen Sicherungsbereich (42) aufweist, wobei der Sicherungsbereich (42) des Tragbalkens (34) und der Sicherungsbereich (48) des Tragarms (36) in Deckung bringbare Durchgangslöcher (60,62) für einen Sicherungsstift (52) aufweisen.

## Claims

1. Sowing machine (10) for dispensing seed and/or fertilizer, having
- a running wheel (38) which is fastened to a support arm (36) and which is able to be moved between a transport state and a working state, wherein the running wheel (38) is raised in the transport state and lowered as far as the ground (64) in the working state;
- a support beam (34) which is fastened to a frame (20), wherein the support arm (36) is connected to the support beam (34) in a manner pivotable about a pivot axis (56); and
- a dosing member (18) which is designed for dosing in a manner dependent on the rotational speed of the running wheel (38) the seed and/or fertilizer quantity to be dispensed;
wherein by a spring-loaded separate coupling member (46), which is designed to transmit a spring force to the support arm (36), wherein the spring-loaded separate coupling member (46) is able to be connected to the support arm (36) in a non-destructively and reversibly detachable manner, **characterized in that** the spring-loaded separate coupling member (46) is articulated on the support arm (36) and/or the support beam (34) in a manner pivotable about the pivot axis (56) of the support arm (36).

2. Sowing machine (10) according to Claim 1,
**characterized in that**, in the working state of the running wheel (38), the spring-loaded separate coupling member (46) transmits the spring force to the support arm (36) such that the running wheel (38) is pushed or pulled in the direction of the ground (64).

3. Sowing machine (10) according to Claim 1 or 2,
**characterized in that**, in the transport state of the running wheel (38), the spring-loaded separate coupling member (46) does not transmit the spring force to the support arm (36).

4. Sowing machine (10) according to one of the preceding claims,
**characterized in that** the spring-loaded separate coupling member (46) is, by means of a securing pin (52), able to be connected to the support arm (36) in a non-destructively and reversibly detachable manner.

5. Sowing machine (10) according to Claim 4,
**characterized in that** the support arm (36) has a securing region (48), wherein the securing region (48) of the support arm (36) and the spring-loaded separate coupling member (46) have, for the securing pin (52), through-holes (50, 58) which are able to be brought into alignment.

6. Sowing machine (10) according to one of the preceding claims,
**characterized in that** it is possible to set multiple different relative positions between the spring-loaded separate coupling member (46) and the support arm (36) for the adjustment of the lowering depth of the running wheel (38) in the working state of the running wheel (38).

7. Sowing machine (10) according to Claims 5 and 6,
**characterized in that**, for the setting of the multiple different relative positions, the securing region (48) of the support arm (36) and/or the spring-loaded separate coupling member (46) have/has, for the securing pin (52), multiple through-holes (50, 58), which are arranged spaced apart from one another and preferably on a circular path.

8. Sowing machine (10) according to one of the preceding claims,
**characterized in that** a spring (44), in particular a tension spring or a gas pressure spring, acts between the support beam (34) and the spring-loaded separate coupling member (46).

9. Sowing machine (10) according to Claim 1,
**characterized in that**, in the working state of the running wheel (38), the spring-loaded separate coupling member (46) follows the pivoting movements of the support arm (36) which are triggered by unevennesses in the ground.

10. Sowing machine (10) according to one of the preceding claims,
**characterized in that** the spring-loaded separate coupling member (46) has a stop surface (54), wherein the stop surface (54) is able to be brought into contact with the support beam (34).

11. Sowing machine (10) according to Claim 10,
**characterized in that**, by way of the contact with the support beam (34), the stop surface (54) of the spring-loaded separate coupling member (46) prevents further pivoting of the spring-loaded separate coupling member (46) about the pivot axis (56) and thus further lowering of the running wheel (38).

12. Sowing machine (10) according to one of the preceding claims,
**characterized in that** the spring-loaded separate coupling member (46) has two securing plates, which are spaced apart from one another, and a connection member (70), wherein the connection member (70) connects the two securing plates to one another.

13. Sowing machine (10) according to Claim 12,
**characterized in that** the spring (44) is connected in a form-fitting manner to the connection member (70) of the spring-loaded separate coupling member (46) and/or in a form-fitting manner to the support beam (34).

14. Sowing machine (10) according to one of the preceding claims,
**characterized in that** the support arm (36) is, preferably by means of a securing pin (52), able to be connected to the support beam (34) in a non-destructively and reversibly detachable manner and a substantially rigid manner.

15. Sowing machine (10) according to one of the preceding claims,
**characterized in that**, in the transport state of the running wheel (38), the support arm (36) is connected to the support beam (34) in a non-destructively and reversibly detachable manner and a substantially rigid manner.

16. Sowing machine (10) according to one of the preceding claims and Claim 5,
**characterized in that** the support beam (34) has a securing region (42), wherein the securing region (42) of the support beam (34) and the securing region (48) of the support arm (36) have, for a securing pin (52), through-holes (60, 62) which are able to be brought into alignment.

## Revendications

1. Semoir (10) permettant de répandre des semences et/ou des engrais, avec
- une roue mobile (38), qui est fixée sur un bras porteur (36) et qui peut être déplacée entre un état de transport et un état de travail et qui dans l'état de travail est abaissée jusque sur le sol (64);
- une barre de support (34), qui est fixée à un châssis (20), dans lequel le bras porteur (36) est relié à la barre de support (34) de façon pivotante autour d'un axe de pivotement (56); et
- un organe de dosage (18), qui est conçu de façon à doser la quantité de semences et/ou d'engrais en fonction de la vitesse de rotation de la roue mobile (38) ;
dans lequel par un élément de couplage séparé (46) soumis à une force de ressort, qui est conçu de façon à transmettre une force de ressort au bras porteur (36), dans lequel l'élément de couplage séparé (46) soumis à une force de ressort peut être relié de façon séparable sans destruction et de façon réversible au bras porteur (36), **caractérisé en ce que** l'élément de couplage séparé (46) soumis à une force de ressort est articulé sur le bras porteur (36) et/ou la barre de support (34) de façon pivotante autour de l'axe de pivotement (56) du bras porteur (36).

2. Semoir (10) selon la revendication 1, **caractérisé en ce que** l'élément de couplage séparé (46) soumis à une force de ressort transmet dans l'état de travail de la roue mobile (38) la force de ressort au bras porteur (36) de telle manière que la roue mobile (38) soit poussée ou tirée en direction du sol (64).

3. Semoir (10) selon la revendication 1 ou 2, **caractérisé en ce que** dans l'état de transport de la roue mobile (38) l'élément de couplage séparé (46) soumis à une force de ressort ne transmet pas la force de ressort au bras porteur (36).

4. Semoir (10) selon l'une quelconque des revendications précédentes, **caractérisé en ce que** l'élément de couplage séparé (46) soumis à une force de ressort peut être relié au bras porteur (36) de façon séparable sans destruction et de façon réversible au moyen d'une goupille de fixation (52).

5. Semoir (10) selon la revendication 4, **caractérisé en ce que** le bras porteur (36) présente une zone de fixation (48), dans lequel la zone de fixation (48) du bras porteur (36) et l'élément de couplage séparé (46) soumis à une force de ressort présentent des trous de passage (50, 58) pouvant se recouvrir pour la goupille de fixation (52) .

6. Semoir (10) selon l'une quelconque des revendications précédentes, **caractérisé en ce que** plusieurs positions relatives différentes entre l'élément de couplage séparé (46) soumis à une force de ressort et le bras porteur (36) peuvent être réglées pour régler la profondeur de descente de la roue mobile (38) dans l'état de travail de la roue mobile (38).

7. Semoir (10) selon une des revendications 5 et 6, **caractérisé en ce que** la zone de fixation (48) du bras porteur (36) et/ou l'élément de couplage séparé (46) soumis à une force de ressort présentent, pour le réglage des multiples positions relatives différentes, plusieurs trous de passage (50, 58) pour la goupille de fixation (52) disposés à distance l'un de l'autre et de préférence sur un tracé circulaire.

8. Semoir (10) selon l'une quelconque des revendications précédentes, **caractérisé en ce qu'**un ressort (44), en particulier un ressort de traction ou un ressort pneumatique, agit entre la barre de support (34) et l'élément de couplage séparé (46) soumis à une force de ressort.

9. Semoir (10) selon la revendication 1, **caractérisé en ce que** l'élément de couplage séparé (46) soumis à une force de ressort suit, dans l'état de travail de la roue mobile (38), les mouvements pivotants du bras porteur (36) provoqués par les inégalités du sol.

10. Semoir (10) selon l'une quelconque des revendications précédentes, **caractérisé en ce que** l'élément de couplage séparé (46) soumis à une force de ressort présente une face de butée (54), dans lequel la face de butée (54) peut être mise en contact avec la barre de support (34).

11. Semoir (10) selon la revendication 10, **caractérisé en ce que** la face de butée (54) de l'élément de couplage séparé (46) soumis à une force de ressort empêche par le contact avec la barre de support (34) un pivotement supplémentaire de l'élément de couplage séparé (46) soumis à une force de ressort autour de l'axe de pivotement (56) et de ce fait une descente supplémentaire de la roue mobile (38).

12. Semoir (10) selon l'une quelconque des revendications précédentes, **caractérisé en ce que** l'élément de couplage séparé (46) soumis à une force de ressort présente deux plaques de fixation espacées l'une de l'autre et un élément de liaison (70), dans lequel l'élément de liaison (70) relie l'une à l'autre les deux plaques de fixation.

13. Semoir (10) selon la revendication 12, **caractérisé en ce que** le ressort (44) est relié par emboîtement à l'élément de liaison (70) de l'élément de couplage séparé (46) soumis à une force de ressort et/ou par emboîtement à la barre de support (34).

14. Semoir (10) selon l'une quelconque des revendications précédentes, **caractérisé en ce que** le bras porteur (36) peut être relié de façon essentiellement rigide à la barre de support (34) de façon séparable sans destruction et de façon réversible de préférence au moyen d'une goupille de fixation (52).

15. Semoir (10) selon l'une quelconque des revendications précédentes, **caractérisé en ce que** le bras porteur (36) est relié dans l'état de transport de la roue mobile (38) à la barre de support (34) de façon séparable sans destruction et de façon réversible et de façon essentiellement rigide.

16. Semoir (10) selon l'une quelconque des revendications précédentes et la revendication 5, **caractérisé en ce que** la barre de support (34) présente une zone de fixation (42), dans lequel la zone de fixation (42) de la barre de support (34) et la zone de fixation (48) du bras porteur (36) présentent des trous de passage (60, 62) pouvant se recouvrir pour une goupille de fixation (52).
